Europäisches Patentamt

European Patent Office

Office européen des brevets

(19)

(11) Numéro de publication: **0 247 912**
**A1**

(12)

# DEMANDE DE BREVET EUROPEEN

(21) Numéro de dépôt: **87400930.1**

(22) Date de dépôt: **22.04.87**

(51) Int. Cl.⁴: **G 21 K 1/02**
**A 61 B 6/02, G 02 F 1/13**

(30) Priorité: **30.04.86 FR 8606327**

(43) Date de publication de la demande:
**02.12.87 Bulletin 87/49**

(84) Etats contractants désignés:
**BE DE GB IT NL SE**

(71) Demandeur: **THOMSON-CSF**
**173, Boulevard Haussmann**
**F-75379 Paris Cédex 08 (FR)**

(72) Inventeur: **Micheron, François**
**THOMSON-CSF SCPI 19, avenue de Messine**
**F-75008 Paris (FR)**

**Staron, Alain**
**THOMSON-CSF SCPI 19, avenue de Messine**
**F-75008 Paris (FR)**

(74) Mandataire: **Lincot, Georges et al**
**THOMSON-CSF SCPI 19, avenue de Messine**
**F-75008 Paris (FR)**

(54) **Dispositif de reconstruction d'image par modulation d'un faisceau incident de radiations.**

(57) Le dispositif comprend au moins un réseau (1, 2, 3) de modulateurs (4). Les modulateurs d'un réseau sont disposés suivant des lignes parallèles et recouvrent la surface d'un plan à peu près perpendiculaire à l'axe du faisceau de radiations (5). Chaque réseau peut être décalé angulairement autour de l'axe du faisceau. Des moyens de commande (8) agissent sur les modulateurs (4) pour faire varier leur coefficient de transmission et/ou de réflexion en fonction de l'image à reconstruire.

FIG_1

EP 0 247 912 A1

**0 247 912**

## Description

Dispositif de reconstruction d'image par modulation d'un faisceau incident de radiations

La présente invention concerne un dispositif de reconstruction d'image par modulation spatiale et/ou temporelle, d'un faisceau incident de radiations, ce faisceau étant composé d'électrons ou de photons visibles ou invisibles.

Elle s'applique notamment à la radiologie et particulièrement à la réalisation de filtres spatiaux de rayons X, de conformateurs de radiodiagnostic et de systèmes de visualisation en général, particulièrement simples, dans le cas où le senseur d'image est un tomographe.

Les modulateurs de faisceau permettant la visualisation d'une image peuvent être classés en deux catégories, suivant qu'ils modulent ou non, directement chaque point ou pixel de celle-ci.

Une première catégorie se rapporte au cas où la modulation porte sur un ensemble de pixels, chaque pixel n'étant pas directement accessible. Ce moyen de visualisation est adapté au cas où l'information permettant la modulation du faisceau n'est pas disponible sous forme de niveau de gris par pixel comme c'est le cas par exemple en tomographie appliqué à l'imagerie du corps humain, avant traitement informatique.

La deuxième catégorie est relative au domaine de la visualisation point par point des images. Dans ce cas, la modulation de faisceau s'effectue toujours dans un espace à deux dimensions, par des écrans à cristaux liquides, des tubes cathodiques etc... et, elle suppose nécessairement l'existence de modulateurs élémentaires, dont la taille correspond à la taille des pixels ou points de l'image, ainsi qu'à celle de moyens appropriés pour les adresser. Elle englobe tous les dispositifs actuellement connus qui permettent la modulation locale d'un faisceau lumineux, en faisant varier son émission, sa transmission ou sa réflexion.

Le besoin d'obtenir des images de bonne qualité augmente les difficultés de réalisation des modulateurs de faisceau, car plus la taille des modulateurs élémentaires répartis sur une surface donnée est réduite, plus leur nombre augmente et plus le dispositif d'adressage et de commande de ceux-ci devient compliqué. On peut constater également que leur emploi est actuellement limité à la modulation de faisceaux de photons d'énergie lumineuse.

Le but de l'invention est de pallier les inconvénients précités.

A cet effet, l'invention a pour objet, un dispositif de reconstruction d'image par modulation d'un faisceau incident de radiations caractérisé en ce qu'il comprend au moins un réseau de modulateurs, les modulateurs d'un réseau étant disposés suivant des lignes parallèles de manière à recouvrir la surface d'un plan à peu près perpendiculaire à l'axe du faisceau, chaque réseau pouvant être décalé angulairement autour de l'axe du faisceau et des moyens de commande pour faire varier les coefficients de transmission et/ou de réflexion des modulateurs en fonction de l'image à reconstruire.

Le dispositif selon l'invention a pour principal avantage qu'il peut être mis en oeuvre dans tout type de modulation de faisceau grâce au fait que la modulation employée ne porte pas directement sur des pixels, mais sur des lignes de l'image à reconstruire, l'information permettant cette modulation pouvant être la connaissance de l'image elle-même, ou une décomposition de celle-ci en ensemble de lignes tel qu'on peut l'obtenir par un procédé tomographique.

Il présente également comme avantage d'être simple à réaliser, dès que dans les applications, et notamment pour celle concernant le filtrage spatial d'un faisceau de rayon X où chaque modulateur élémentaire doit être capable d'une absorption variable, le modulateur élémentaire de la taille d'un pixel présente une certaine complexité de mise en oeuvre, du fait de ses dimensions ou de sa disposition au voisinage des autres pixels qui le rendent difficilement accessible.

D'autres caractéristiques et avantages de l'invention apparaîtront ci-après à l'aide de la description faite en regard des dessins annexés qui représentent :
- la figure 1, un schéma de principe d'un mode particulier de réalisation d'un dispositif selon l'invention,
- la figure 2, une illustration d'un mode de reconstruction d'une image de taille 3 × 3 à l'aide d'un réseau de trois modulateurs linéaires,
- la figure 3, un schéma pour illustrer la fonction de détection d'un modulateur élémentaire,
- la figure 4, un schéma pour illustrer le principe de reconstruction d'image selon l'invention,
- les figures 5a et 5b, une application du dispositif selon l'invention à la réalisation d'un filtre centré,
- la figure 6 un exemple d'image obtenue à l'aide d'un dispositif selon l'invention dans lequel chaque modulateur est constitué par un conduit rempli d'un liquide de contraste à ses deux extrémités.

Selon l'invention, chaque modulateur élémentaire, au lieu de correspondre à un pixel, a les dimensions d'une ligne de l'image et le modulateur complet se présente comme un réseau de modulateurs élémentaires disposés suivant des lignes parallèles entre elles, ces lignes n'étant pas nécessairement rectilignes. Pour assurer la reconstruction de l'image, les modulateurs élémentaires doivent pouvoir occuper un certain nombre d'orientations, ce qui peut se faire successivement dans le temps, ou simultanément par plusieurs réseaux juxtaposés décalés angulairement entre eux, toutes les solutions intermédiaires étant évidemment possibles.

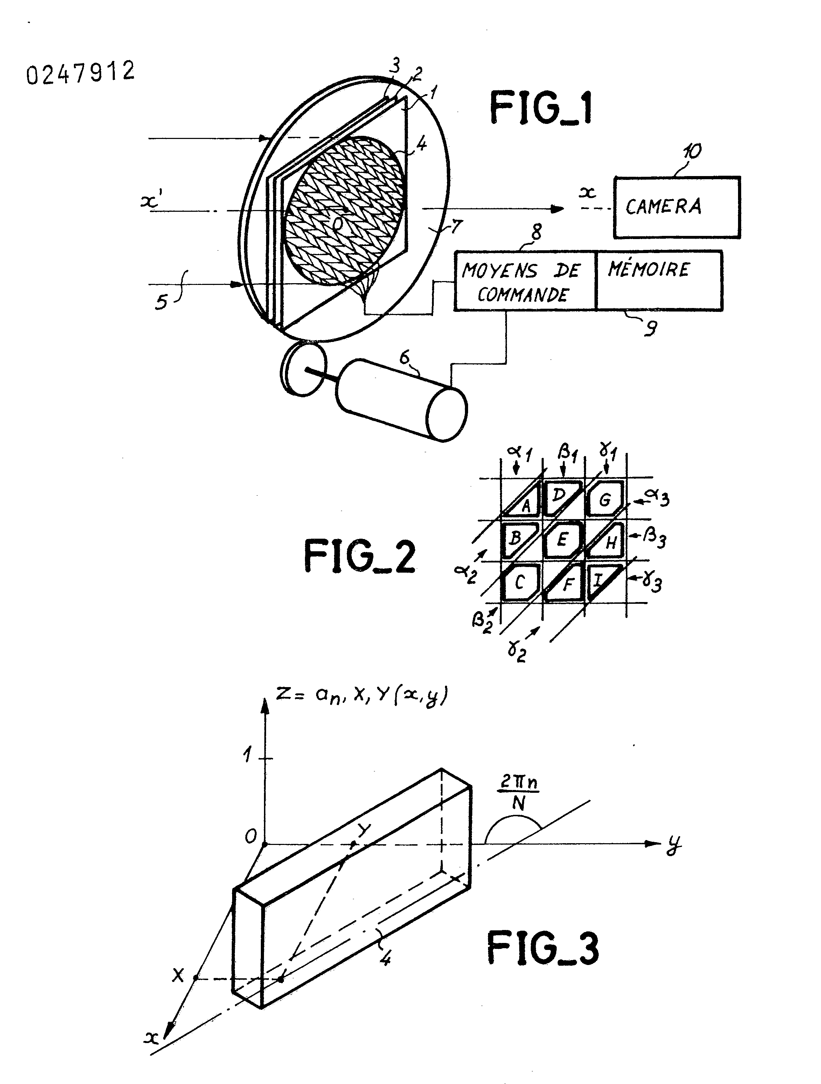

Un mode de réalisation correspondant à un type de solution intermédiaire est représenté à la figure 1.

Le dispositif selon l'invention qui est représenté à la figure 1 comprend un ensemble de plusieurs réseaux plans 1, 2 et 3 de modulateurs élémentaires 4. Les plans des réseaux sont orientés parallèlement entre eux et les modulateurs 4 sont disposés suivant des lignes parallèles dans chacun des réseaux. Ces derniers sont

2

orientés de façon que les directions des modulateurs 4 d'un réseau soient décalées angulairement par rapport à celles des autres réseaux. Les plans des réseaux 1, 2 et 3 sont disposés dans un faisceau de radiations 5 perpendiculairement à leur direction de propagation, ce faisceau de radiations pouvant éventuellement être émis par une source de rayons X, ou toute source susceptible d'émettre un rayonnement d'électrons ou de photons visibles ou invisibles.

Les modulateurs élémentaires 4 sont constitués de façon connue, soit par des volets en matériau lourd comme le plomb, qui, en position ouverte, vue par la tranche, présentent une bonne transmission et en position fermée, en faible incidence, absorbent les photons, soit encore par des conduits de matière absorbante introduite aux extrémités des modulateurs élémentaires.

Suivant encore d'autres modes de réalisation possibles de l'invention la commande des volets peut être assurée par des moyens piézoélectriques et dans ce cas les volets sont plaqués de façon connue sur une structure piézoéléctrique de type par exemple bimorphe, travaillant avec une extrémité libre ou en flambement, ou encore, par des moyens hydropneumatiques, électrostatiques ou électromagnétiques, éventuellement constitués par un ou plusieurs moteurs déportés aux extrémités des volets.

Sur la figure 1, les réseaux 1, 2, 3 sont maintenus solidairement les uns aux autres par tous moyens de fixation connus, non représentés. Ils sont mis en rotation par pas angulaires successifs, autour d'un axe de rotation (X', 0, X), parallèle à la direction de propagation du faisceau 5, par des moyens de mise en rotation 6, de types connus, constitués éventuellement par un moteur pas à pas ou tout dispositif équivalent. Les moyens de mise en rotation 6 entraînent un plateau ou une couronne 7 transparents aux radiations sur lesquels reposent ou à l'intérieur desquels sont fixés les réseaux plans 1, 2 et 3 de modulateurs 4. Ces modulateurs 4 sont commandés par des moyens de commande 8 formés, de façon connue, par un organe de traitement de l'information, du type ordinateur ou tout dispositif équivalent, comprenant au moins une mémoire 9 pour stocker les valeurs des coefficients de transmission de chaque ligne de modulateur 4 nécessaires à la reconstruction de l'image. Les moyens de commande 8 assurent également la commande des pas de rotation des moyens de mise en rotation 6 en synchronisme avec la commande des lignes de modulateur 4.

Un senseur d'image 10, formé par exemple par une caméra, est placé suivant l'axe (X',0,X) du faisceau 5. Il permet de visualiser l'image reconstruite résultant de l'excitation par les moyens de commande 8 des différents modulateurs 4. De préférence le senseur d'image sera pourvu de moyens d'intégration pour permettre la juxtaposition des différentes images retransmises à chaque pas de rotation du plateau ou de la couronne 7 et à chaque commande des modulateurs 4.

Le fonctionnement du dispositif selon l'invention est explicité ci-après, en prenant à titre d'exemple, le cas d'un unique réseau de modulateurs élémentaires linéaires, parallèles entre eux, animé d'un mouvement de rotation pas à pas autour de l'axe de rotation (X',0,X), le réseau étant constitué par K lignes de modulateurs élémentaires parallèles, pouvant présenter par rapport à une direction de référence des angles $\frac{2\pi n}{N}$, avec 0 $\leq$ n $\leq$ N-1, N étant un entier positif. Dans la suite de la description on désigne par $\alpha$ (k,n) l'intensité de la ligne k, lorsque l'angle est égal à $\frac{2\pi n}{N}$ et par I (X,Y) l'intensité du point de coordonnées X,Y reconstruit sur le senseur d'image 10, et le mot "intensité", désigne ici une grandeur physique liée à l'information en termes de niveau de gris sur l'image, que le senseur d'images 10 est capable d'intégrer.

Dans cette hypothèse, la commande du modulateur peut être réalisée, du moins en théorie, de trois façons différentes.

Selon une première approche, ou approche algébrique, on peut considérer que le dispositif précédemment décrit forme un système discret, pour lequel la relation I

$$(X,Y) = \sum_{n=0}^{N-1} \alpha \left[ k(n,X,Y),n \right]$$

(1) est toujours vérifiée. Dans la relation (1), k est une fonction de l'angle (donc de n) et du point (X,Y) car, la ligne qui contribue à l'intensité d'un point de coordonnées (X,Y) donné est différente suivant l'angle de rotation du réseau. I (X,Y) a dans ces conditions les dimensions d'une matrice M $\times$ M, la relation (1) étant représentative d'un système de $M^2$ équations à k $\times$ N inconnues. Elle permet de reconstruire l'image donnée I (X,Y) par des valeurs de modulations $\alpha$ (k,n) qui sont les solutions du système à $M^2$ équations.

Ces solutions ne peuvent exister que si K $\times$ N > $M^2$, ce qui donne une condition nécessaire sur le nombre de positions que le système doit occuper lorsqu'il dispose d'un nombre de lignes donné, pour assurer la reconstruction.

La recherche de la solution, si elle existe, passe par l'inversion, si elle est possible, d'une matrice de taille $M^2$, binaire et en général lacunaire.

Cette approche est un bon moyen pour tester la méthode de reconstruction, cependant elle met en évidence des défauts notamment sur la forme et le positionnement des pixels reconstruits, du type de ceux qui apparaissent sur l'image reconstruite de la figure 2 qui résulte de l'application de la méthode précédente au cas où M = 3, k = 3 et N = 3.

En effet, selon l'image reconstruite de la figure 2, la matrice [I] de pixels A, B, C, D, E, F, G, H est obtenue à partir d'un réseau de k = 3 modulateurs linéaires prenant N = 3 orientations successives : $\theta_i = (i-1)\frac{\pi}{3}$ avec 1 $\leq$ i $\leq$ 3. [I] résulte de la juxtaposition des trois positions successives du réseau correspondant aux angles de rotation 0, $\frac{\pi}{4}$ et $\frac{\pi}{2}$, et l'image obtenue pour chaque position du réseau est momentanément mémorisée par le senseur d'image 10 d'un temps suffisant pour pouvoir être juxtaposée aux images suivantes fournies au cours des autres positions successives du réseau, la ligne 1(resp 2,3) du réseau étant caractérisée par une intensité $\alpha_i$(resp $\beta_i$, $\gamma_i$) lorsque son inclinaison vaut (i-1)$\frac{\pi}{4}$ avec $1 \leq i \leq 3$.

La répartition des intensités sur chaque modulateur du réseau pour les trois orientations $\theta_i$ est alors définie par :

$$[I_1] = \begin{bmatrix} \alpha_1 & \beta_1 & \gamma_1 \\ \alpha_1 & \beta_1 & \gamma_1 \\ \alpha_1 & \beta_1 & \gamma_1 \end{bmatrix} \quad ; \quad [I_2] = \begin{bmatrix} \alpha_2 & \alpha_2 & \beta_2 \\ \alpha_2 & \beta_2 & \gamma_2 \\ \beta_2 & \gamma_2 & \gamma_2 \end{bmatrix} \quad \text{et} \quad [I_3] = \begin{bmatrix} \alpha_3 & \alpha_3 & \alpha_3 \\ \beta_3 & \beta_3 & \beta_3 \\ \gamma_3 & \gamma_3 & \gamma_3 \end{bmatrix}$$

d'où il résulte l'image I qui est formée par la juxtaposition de $[I_1]$, $[I_2]$ et $[I_3]$; cette juxtaposition vérifiant naturellement la relation matricielle

$$\begin{bmatrix} A \\ B \\ C \\ D \\ E \\ F \\ G \\ H \\ I \end{bmatrix} = \begin{bmatrix} 1 & 1 & 1 & 0 & 0 & 0 & 0 & 0 & 0 \\ 1 & 1 & 0 & 0 & 0 & 1 & 0 & 0 & 0 \\ 1 & 0 & 0 & 0 & 1 & 0 & 0 & 0 & 1 \\ 0 & 1 & 1 & 1 & 0 & 0 & 0 & 0 & 0 \\ 0 & 0 & 0 & 1 & 1 & 1 & 0 & 0 & 0 \\ 0 & 0 & 0 & 1 & 0 & 0 & 0 & 1 & 1 \\ 0 & 0 & 1 & 0 & 1 & 0 & 1 & 0 & 0 \\ 0 & 0 & 0 & 0 & 0 & 1 & 1 & 1 & 0 \\ 0 & 0 & 0 & 0 & 0 & 0 & 1 & 1 & 1 \end{bmatrix} \times \begin{bmatrix} \alpha_1 \\ \alpha_2 \\ \alpha_3 \\ \beta_1 \\ \beta_2 \\ \beta_3 \\ \gamma_1 \\ \gamma_2 \\ \gamma_3 \end{bmatrix}$$

C'est-à-dire les relations

$$A = \alpha_1 + \alpha_2 + \alpha_3$$

$$B = \alpha_1 + \alpha_2 + \beta_3$$

$$C = \alpha_1 + \beta_2 + \gamma_3$$

......................

$$I = \gamma_1 + \gamma_2 + \gamma_3$$

qui traduisent le recouvrement des différentes intensités d'éclairement $\alpha_i$, $\beta_i$ et $\gamma_i$ des modulateurs combinés trois à trois. Cependant comme le montre la figure 2, la surface commune de recouvrement varie d'un pixel à l'autre, de sorte que l'image reconstruite obtenue par cette méthode n'a pas une qualité irréprochable.

Une deuxième approche ou approche analytique consiste à supposer que l'on dispose d'une méthode permettant, à partir d'une "image" caractérisée par une fonction m (x,y), de calculer les intensités $\alpha(k,n)$

- le problème consiste à déterminer à partir d'une image donnée i(x,y) à reconstruire, de quelle pseudo-image m(x,y) il faut partir pour qu'un réseau de modulateurs linéaires, de valeurs d'intensités $\alpha(k,n)$ calculées par une méthode donnée, reconstruise l'image i(x,y).

Cette formulation du problème est en apparence plus compliquée, mais elle a l'avantage de toujours présenter une solution m (x,y).

Soit, en effet la fonction de détection $a_{n,x,y}$ d'un modulateur linéaire 4 d'orientation $\frac{2\pi n}{N}$ passant par un point (X,Y) tel que représenté à la figure 3, ($a_{n,X,Y}(x,y) = 1$ lorsque le modulateur passe par le point (X,Y) et $a_{n,X,Y}(x,y) = 0$ dans le cas contraire).

$$\text{soit } \alpha\left[k(n, X, Y), n\right] = \int\int_{-\infty}^{+\infty} a_{n,X,Y}(x,y).m(x,y)dx.dy \quad (2)$$

la relation entre l'intensité du modulateur linéaire k (passant par X, Y), d'orientation $\frac{2\pi n}{N}$ et la fonction m(x,y).

On a alors, si r(x,y) désigne l'intensité de l'image reconstruite.

$$r(x,y) = \sum_{n=0}^{N-1} \int\int_{-\infty}^{+\infty} a_{n,X,Y}(x,y).m(x,y).dx.dy \quad (3)$$

Comme on cherche à obtenir une image donnée i(X, Y), la fonction m(x, y) cherchée est solution de :
$$r(X,Y) = i(X,Y) \quad (4)$$
Un modulateur élémentaire, d'inclinaison $\frac{2\pi n}{N}$ donnée, passe par de nombreux points X, Y. La surface $S_{k,n}$ qu'il occupe peut alors être représentée par la relation
$$S_{k,n} = \{(X,Y) \ \varepsilon \ 0x,0y \text{ tels que } k(n,X,Y) = C^{te}\}.$$
Si $X_{k,n}Y_{k,n}$ est un point particulier de $S_{k,n}$ pour n fixé, par exemple, son centre,

$$\text{on a } \forall (X,Y) \in S_{k,n}, \ a_{n,X,Y} = a_{n,X_{k,n},Y_{k,n}}$$

Soit $p_n$ la fonction qui, à tout point (X,Y) du plan, fait correspondre le point $(X_{k,n}, Y_{k,n})$ à n fixé ; $p_n$ est une projection sur une famille de points, que l'on peut définir comme suit : $\sqcup n\varepsilon[0,N-1]$ et $\sqcup (X,Y)\varepsilon$ Support de l'image, il existe un unique modulateur k tel que $(X,Y)\varepsilon S_{k,n}$. Alors
$$p_n(X,Y) = (X_{k,n} , Y_{k,n}), \text{ centre de } S_{k,n}.$$
On a :
$$\sqcup n, \ \sqcup (X,Y)\varepsilon \text{ support de l'image, } a_{n,X,Y} = a_{n,p}(X,Y)$$
d'autre part, la fonction de détection d'un modulateur élémentaire centré en $p_n(X,Y)$ se déduit par translation de celle d'un modulateur centré en O, et de même orientation :
l'équation (4) s'écrit alors :

$$i(X,Y) = \sum_{n=0}^{N-1} \int\int_{-\infty}^{+\infty} a'_n\left[p_n(X,Y)-(x,y)\right] m(x,y).dx.dy$$

$$\text{avec } a'_{n(x,y)} = a_{n,0,0}\left[-(x,y)\right]$$

$$\text{Soit } i = \sum_{n=0}^{N-1} (a'_n \ast m)o \ p_n \quad (5)$$

où $\ast$ désigne l'opérateur de convolution
et o désigne l'opérateur de composition.
En considérant la surface $S_{k,n}$ d'un modulateur linéaire comme un rectangle de largeur d, et de longueur D, un tel modulateur, centré à l'origine d'un repère (O,x,y) et aligné sur Oy aura comme fonction de détection $a_0(x,y) = \text{Rect} \frac{d}{2} (x).\text{Rect} \frac{D}{2} (y)$
Si D est très grand devant les dimensions de l'image efficace (ce qui revient à prolonger i(X,Y) et m(x,y) par la valeur O au delà du support efficace), et si d est très petit (ce qui suppose un réseau avec beaucoup de modulateurs linéaires), on ne fait pas beaucoup d'erreur en considérant que chaque modulateur linéaire passant par (X,Y) est centré en (X,Y). On a alors $p_n = $ Identité pour tout n, et l'équation (5) devient :

$$i = (\sum_{n=0}^{N-1} a_n') \times m \qquad (6)$$

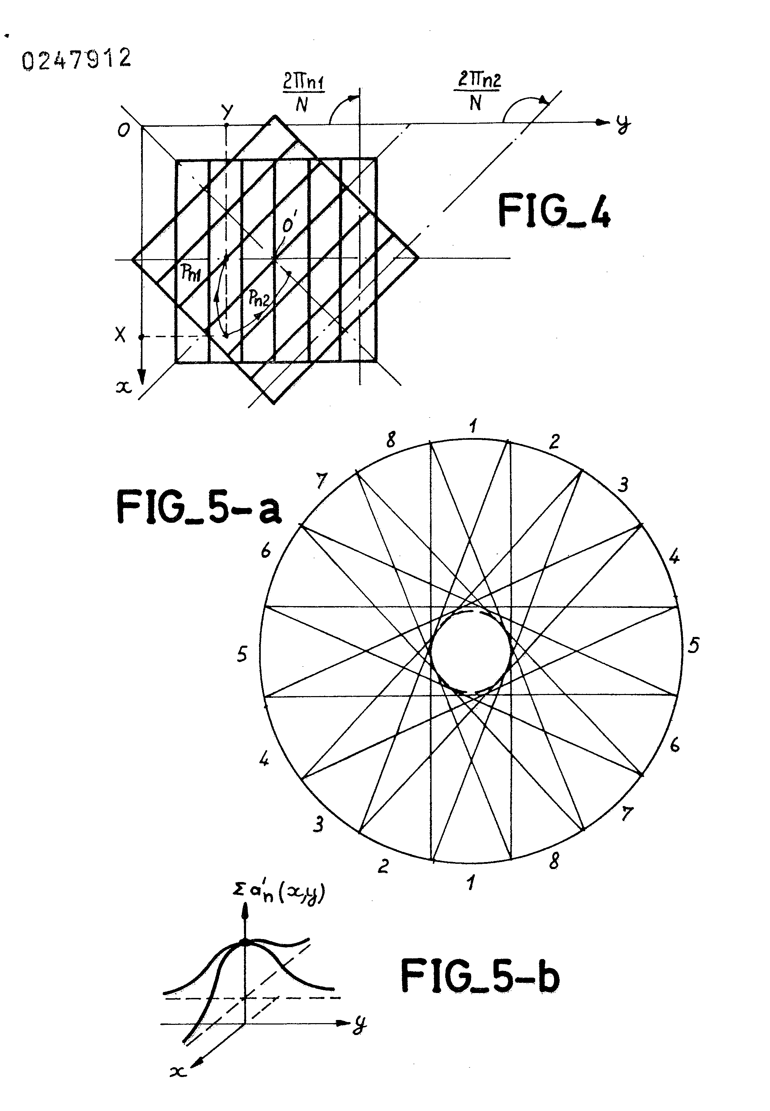

L'image reconstruite s'écrit alors comme la convolution d'une image source à définir par un filtre pondérateur, illustré aux figures 5a, 5b.

L'équation (6) a pour Transformée de Fourier :

$$I = (\sum_{n=0}^{N-1} A'_n).M \qquad (7)$$

$a_0(X,Y)$ a pour Transformée de Fourier

$A_0(f_x,f_y) = d.D.\text{sinc} (d.f_x).\text{sinc} (D.f_y)$

et $a_n(X,Y)$ se déduit de $a_0(X,Y)$ par une rotation d'angle $\frac{2\pi n}{N}$

sinc étant le symbole de la fonction sinus cardinal définie comme suit :

$$\begin{cases} \text{sinc}(x) = \dfrac{\sin x}{x} & \forall\ x \in R^* \\[2ex] \text{sinc}(0) = 1 \end{cases}$$

Donc $a_n(X,Y)$ a pour Transformée de Fourier

$$A_n(f_x,f_y) = d.D.\text{sinc}(d(f_x.\cos\frac{2\pi n}{N} - f_y.\sin\frac{2\pi n}{N}))\text{sinc} (D(f_x.\sin\frac{2\pi n}{N} + f_y.\cos\frac{2\pi n}{N}))$$

d'où on déduit :

$$I(f_x,f_y)=M(f_x,f_y) \times \sum_{n=0}^{N-1} d.D.\text{sinc}\left[d(f_x.\cos\frac{2\pi n}{N} - f_y.\sin\frac{2\pi n}{N})\right]\text{sinc}\left[D(f_x.\sin\frac{2\pi n}{N} + f_y.\cos\frac{2\pi n}{N})\right]$$

puisque $A'_n(f_x,f_y) = A_n(-f_x, -f_y)$ .

ceci permet, en prenant les précautions nécessaires de remonter à la fonction cherchée :

$$m(x,y) = TF^{-1}\left\{I(f_x,f_y)\left(\sum_{n=0}^{N-1} d.D.\text{sinc}.d(f_x.\cos\frac{2\pi n}{N} - f_y.\sin\frac{2\pi n}{N}) . \text{sinc}\left[D(f_x.\sin\frac{2\pi n}{N} + f_y.\cos\frac{2\pi n}{N})\right]\right)^{-1}\right\} \qquad (8)$$

Les valeurs des modulations des différents modulateurs peuvent alors être déduites en appliquant la relation (2).

Cependant la méthode précédente donne une solution approchée difficile à calculer et on pourra lui préférer une troisième méthode dictée par des considérations géométriques qui permettront d'approcher plus grossièrement le résultat mais avec l'avantage qu'elle envisage le problème d'une façon plus simple.

On peut en effet chercher à reconstruire l'image I sous la forme d'une matrice $M \times M$ en prenant en considération que le nombre N d'orientations minimum est tel qu'à tout point de I, il existe une direction permettant d'atteindre n'importe quel autre point de l'image. La projection $p_n$ de l'image I selon la direction n, est alors définie par :

$p_n = \Sigma m_{ij}$ dans la direction n passant par le point $(i_0 j_0)$ $(i_0,j_0)$  $p_n$ peut être vue comme l'image du sytème de modulation figé dans la position angulaire $\frac{2\pi n}{N}$ . Comme chaque position du système est pondérée par le

poids $\frac{1}{N}$, et que le senseur d'image 10 peut être considéré comme un dispositif intégrateur, chaque coefficient de la matrice $p_n$ vue comme image du modulateur vaut dans ces conditions :

$$p_n = \frac{1}{N} \sum_{(i_o, j_o)}^{(i_o^n, j_o)} m_{ij}$$

On a alors :

$$\sum_{n=1}^{N} p_n = \frac{N-1}{N} I + \frac{\sum_{ij} m_{ij}}{N} \cdot C \qquad (9)$$

où I est la matrice image, et C la matrice unité.

Cette dernière méthode apparaît dans ces conditions comme un moyen extrêment simple de reconstruction puisque pour chaque valeur n, les intensités $\alpha(k,n)$ sont les k coefficients différents de $p_n$. Elle est entâchée cependant d'un effet parasite que l'on peut appeler "fond continu".

Cependant on peut pallier cet inconvénient en modifiant les projections $p_n$. Cette modification peut s'effectuer :

- en multipliant les projections $p_n$ par un coefficient "amplificateur de dynamique".
- en supprimant la composante continue de chacune des projections $p_n$ (pour se ramener à une situation : telle que $\bigcup n$ $\inf$ $p_{n_{i,j}} = 0$), ce qui diminue la composante continue de la reconstruction exprimée par l'équation (9).
- en diminuant davantage le fond continu par l'incorporation de connaissances "à priori" sur l'image, par exemple, les points périphériques, lorsqu'ils sont en dehors de la zone à observer, pourront être considérés comme non pertinents, et on pourra de cette façon améliorer la qualité de la zone centrale de l'image.

La méthode qui vient d'être exposée est illustrée ci-après à l'aide de l'exemple suivant.

Dans cet exemple de reconstruction, l'image à reconstruire est définie par une matrice de coefficient $m_{ij}$ ayant les valeurs numériques définies par le tableau :

$$M = \begin{bmatrix} 0 & 1 & 0 \\ 1 & 3 & 2 \\ 2 & 2 & 1 \end{bmatrix}$$

et cette matrice est projetée suivant un nombre $N = 8$ projections.

Les matrices de projection obtenues pour des valeurs de $\frac{2\pi n}{N}$ égales à $0, \frac{\pi}{6}, \frac{\pi}{4}, \frac{\pi}{3}, \frac{\pi}{2}, \frac{2\pi}{3}, \frac{3\pi}{4}, \frac{5\pi}{6}$ sont respectivement :

pour $\quad \dfrac{2\pi n}{N} = 0,\quad M_1 = \begin{bmatrix} 1 & 1 & 1 \\ 6 & 6 & 6 \\ 5 & 5 & 5 \end{bmatrix}$

pour $\quad \dfrac{2\pi n}{N} = \dfrac{\pi}{6},\quad M_2 = \begin{bmatrix} 0 & 1 & 1 \\ 1 & 3 & 4 \\ 4 & 2 & 1 \end{bmatrix}$

pour $\quad \dfrac{2\pi n}{N} = \dfrac{\pi}{4},\quad M_3 = \begin{bmatrix} 0 & 2 & 5 \\ 2 & 5 & 4 \\ 5 & 4 & 1 \end{bmatrix}$

pour $\quad \dfrac{2\pi n}{N} = \dfrac{\pi}{3},\quad M_4 = \begin{bmatrix} 0 & 3 & 2 \\ 1 & 3 & 2 \\ 3 & 2 & 1 \end{bmatrix}$

pour $\quad \dfrac{2\pi n}{N} = \dfrac{\pi}{2},\quad M_5 = \begin{bmatrix} 3 & 6 & 3 \\ 3 & 6 & 3 \\ 3 & 6 & 3 \end{bmatrix}$

pour $\quad \dfrac{2\pi n}{N} = \dfrac{2\pi}{3},\quad M_6 = \begin{bmatrix} 2 & 2 & 0 \\ 1 & 3 & 2 \\ 2 & 2 & 2 \end{bmatrix}$

pour $\quad \dfrac{2\pi n}{N} = \dfrac{3\pi}{4},\quad M_7 = \begin{bmatrix} 4 & 3 & 0 \\ 3 & 4 & 3 \\ 2 & 3 & 4 \end{bmatrix}$

et

pour $\quad \dfrac{2\pi n}{N} = \dfrac{5\pi}{6},\quad M_8 = \begin{bmatrix} 2 & 1 & 0 \\ 2 & 3 & 2 \\ 2 & 2 & 2 \end{bmatrix}$

En additionnant chaque matrice élémentaire il vient

$$\sum_{i=1}^{8} M_i = \begin{bmatrix} 0 & 7 & 0 \\ 7 & 21 & 14 \\ 14 & 14 & 7 \end{bmatrix} + 12 \begin{bmatrix} 1 & 1 & 1 \\ 1 & 1 & 1 \\ 1 & 1 & 1 \end{bmatrix}$$

Pour simplifier il est possible d'enlever un fond continu de la matrice $M_1$ correspondant à une fois la matrice unité et un fond continu de la matrice $M_5$ correspondant à 3 fois la matrice unité.

En considérant que les points (1,1) et (1,3) de l'image, de valeur nulle, ne sont pas significatifs et correspondent à une zone où il n'y a pas d'objet à observer on peut encore soustraire respectivement les matrices

$$\begin{bmatrix} 0 & 1 & 1 \\ 1 & 1 & 1 \\ 1 & 1 & 1 \end{bmatrix}, \begin{bmatrix} 0 & 1 & 1 \\ 1 & 1 & 1 \\ 1 & 1 & 1 \end{bmatrix}, \quad \begin{bmatrix} 0 & 1 & 1 \\ 1 & 1 & 1 \\ 1 & 1 & 1 \end{bmatrix}, \quad \begin{bmatrix} 1 & 1 & 0 \\ 1 & 1 & 1 \\ 1 & 1 & 1 \end{bmatrix}, \quad \begin{bmatrix} 2 & 2 & 0 \\ 2 & 2 & 2 \\ 2 & 2 & 2 \end{bmatrix}$$

$$\text{et} \quad \begin{bmatrix} 1 & 1 & 0 \\ 1 & 1 & 1 \\ 1 & 1 & 1 \end{bmatrix}$$

des matrices $M_2$ , $M_3$ , $M_4$ , $M_6$ , $M_7$ et $M_8$

On obtient alors une représentation matricielle simplifiée telle que :

$$\sum_{i=1}^{8} M'_i = \begin{bmatrix} 0 & 7 & 0 \\ 7 & 21 & 14 \\ 14 & 14 & 7 \end{bmatrix} + \begin{bmatrix} 1 & 1 & 1 \\ 1 & 1 & 1 \\ 1 & 1 & 1 \end{bmatrix} + \begin{bmatrix} 4 & 0 & 5 \\ 0 & 0 & 0 \\ 0 & 0 & 0 \end{bmatrix}$$

Soit après pondération

$$\frac{1}{7} \sum_{i=1}^{8} M'_i = M + \frac{1}{7} C + \varepsilon$$

$$\text{avec} \quad \varepsilon = \begin{bmatrix} \frac{4}{7} & 0 & \frac{5}{7} \\ 0 & 0 & 0 \\ 0 & 0 & 0 \end{bmatrix}$$

(La matrice $\varepsilon$ contenant les points non pertinents qui représentent l'écart par rapport à la solution).

Dans le cas où la matrice image ne contient pas de O, la matrice $\varepsilon$ est identiquement nulle.

Le fond continu, lorsque l'on a N projections vaut alors en chaque point :

$$C = \frac{1}{N-1} \ M_{\underset{ij}{in}}(m_{ij})$$

D'autres considérations interviennent, pour clore cette approche du problème :

- Le "fond continu" en lui-même peut encore être compensé par un effet de seuil du senseur d'image intégrateur. - Dans le cas d'une image "en négatif", on pourra le compenser en augmentant la puissance du faisceau incident.

- Enfin, le problème du filtrage n'apparaît pas ici du fait des hypothèses de départ simplificatrices. Cependant, dans le cas d'un filtre spatial de rayons X dont on ne veut pas qu'il ait une structure trop bien définie, le flou résultant de cette convolution peut être un atout. (Chaque pixel a une absorption qui dépend de celle des pixels d'un certain voisinage).

Dans le cas particulier où l'invention est appliquée à un conformateur pour le radiodiagnostic, où l'image à reconstruire est à 2 niveaux de gris (Noir et Blanc), et représente une forme assez simple, (exemple le coeur) on pourra opter pour un dispositif statique formé par plusieurs réseaux juxtaposés plutôt que de faire tourner un seul réseau autour de l'axe du faisceau lorsque la forme à représenter est convexe (majorité des cas), le nombre de réseaux de modulateurs dépendra alors de la précision souhaitée sur sa définition, mais pourra cependant être restreint.

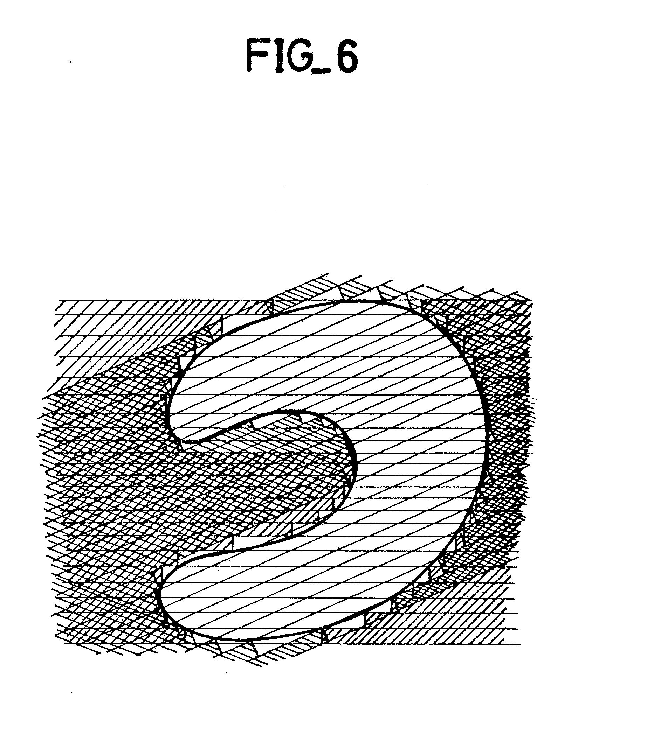

La présente invention n'est pas limitée aux exemples de réalisation qui viennent d'être décrits et il va de soi que ceux-ci pourront subir de nombreuses modifications et adaptations en fonction des applications. Par exemple, pour toutes les formes ayant la propriété suivante : "en chaque point du contour de la forme, il passe au moins une droite dont l'intersection avec la forme est connexe", comme celle représentée sur la figure 6, une solution avantageuse pourra consister à utiliser un "pseudo-modulateur" linéaire, constitué d'un réservoir linéaire autorisant l'admission de liquide de contraste par ses 2 extrémités. Chaque modulateur pourra alors être séparé en 3 zones de dimensions variables, dont les 2 extrêmes seront opaques, et la zone centrale transparente. Le nombre de réseaux de tels modulateurs dépend de la forme en question, mais peut être estimé à la moitié de ceux requis dans le cas précédent.

Suivant d'autres modes de réalisations, on pourra également éviter l'emploi de la modulation temporelle précédemment décrite, en disposant simultanément des réseaux de modulateurs linéaires en série, décalés en rotation les uns par rapport aux autres. On n'aura plus besoin dans ce cas de senseur d'image intégrateur.

De mêmes toutes les solutions intermédiaires seront également possibles : en disposant par exemple N réseaux de modulateurs légèrement décalés les uns par rapport aux autres, l'ensemble étant animé d'un mouvement de rotation, la vitesse de rotation et la fréquence de commutation seront alors divisées par N.

Les approches permettant de concevoir des algorithmes de reconstruction de l'image qui génèrent les commandes des modulateurs linéaires en fonction de leur angle ont été données à titre indicatif. Rien n'empêche en particulier d'imaginer une suite $(p'_n)$ telle que $\bigcup N'$ la relation,

$$\text{Norme} \cdot \left( \sum_{n=1}^{N'} p'_n - I \right) \text{ soit minimale}$$

où Norme est une norme de l'espace des matrices à définir et I est la matrice image que l'on souhaite obtenir en fin de reconstruction. Ceci permet d'envisager un système de reconstruction dont la durée de reconstruction deviendrait un paramètre indicateur de qualité, donc que l'on n'aurait plus besoin de connaître à priori.

Dans le cas où les modulateurs utilisés ne fonctionnent qu'en tout ou rien, plusieurs solutions sont encore possibles :

. Si le temps de commutation est suffisamment bref, pour une position donnée, on peut faire varier la durée pendant laquelle le modulateur est à "1" (modulation temporelle pendant la durée d'exposition à une position angulaire donnée).

. Si l'on sait faire des modulateurs linéaires dont la position "1" (absorption) peut varier en absorption d'un type de modulateur à l'autre, un empilement de quatre réseaux dont les modulations nominales sont bien choisies suffit à reconstituer une image à 16 niveaux de gris.

. On peut aussi composer l'image en 4 fois, ce qui multiplie fréquence et vitesse de rotation par 4, en changeant l'énergie incidente à chaque flash, en agissant directement sur le tube, ou par l'intermédiaire d'un modulateur, ou en modifiant la durée, ou en combinant ces effets, ce qui donne aussi une image à 16 niveaux de gris.

L'invention en question permet de reconstruire une image numérique présente dans la mémoire d'un ordinateur, mais aussi une image dont on ne connaît que la décomposition en réseaux de lignes, telle qu'un tomographe peut la fournir. Il est possible d'envisager le cas où le couplage tomographe/dispositif de reconstruction serait purement analogique.

La reconstruction envisagée est principalement une modulation d'absorption, mais rien ne s'oppose à ce que l'on puisse prévoir le cas où l'on disposerait de modulateurs actifs : émetteurs de lumière lampes à décharge...) réflecteurs, modulateurs de phase (biréfringence...).

Egalement on a pu remarquer que les modulateurs décrits ont la forme de lignes droites, mais rien ne s'oppose à ce que le même principe de l'invention s'applique aussi à des modulateurs de formes diverses, dans la mesure où ils recouvrent la surface de l'image, et où il existe une famille de positions pour cette surface réduisant les intersections des modulateurs à la taille d'un pixel.

Dans le même esprit ces modulateurs linéaires décrits ont une forme constante tout au long du mouvement, on concevra que cette forme n'est pas limitative et l'on pourra envisager les cas où leur forme varie d'une position à l'autre. La taille des pixels sera alors donnée par l'intersection des formes pour toutes les positions. Par exemple, en optique, un modulateur linéaire peut être, dans un matériau homogène de type magnétooptique, un domaine où l'aimantation est uniforme. Ces domaines peuvent voir leurs largeurs varier au cours du mouvement. Encore une autre manière de procéder sera d'engendrer un réseau dans un matériau acoustooptique, à l'aide d'un transducteur piézoélectrique large bande. Ce réseau sera alors de pas variable.

**Revendications**

1. Dispositif de reconstruction d'image par modulation d'un faisceau incident de radiations (5), caractérisé en ce qu'il comprend au moins un réseau (1, 2, 3) de modulateurs (4), les modulateurs d'un réseau étant disposés suivant des lignes parallèles, de manière à recouvrir la surface d'un plan à peu près perpendiculaire à l'axe du faisceau (5), chaque réseau pouvant être décalé angulairement autour de l'axe du faisceau, et des moyens de commande (8) pour faire varier les coefficients de transmission et/ou de réflexion des modulateurs en fonction de l'image à reconstruire.

2. Dispositif selon la revendication 1, caractérisé en ce que l'occupation du nombre déterminé d'orientation d'un réseau s'effectue successivement dans le temps par rotations (6, 7) d'angles élémentaires successifs du réseau autour de l'axe longitudinal du faisceau.

3. Dispositif selon la revendication 1, caractérisé en ce qu'il comprend plusieurs réseaux plans (1, 2, 3) de modulateurs (4) maintenus juxtaposés les uns aux autres, la direction des modulateurs de chaque réseau étant décalée relativement à la direction des modulateurs des autres réseaux.

4. Dispositif selon l'une quelconque des revendications 1 à 3, caractérisé en ce que les modulateurs (1) sont disposés suivant des lignes droites.

5. Dispositif selon l'une quelconque des revendications 1 à 4, caractérisé en ce que les modulateurs (4) sont constitués par des volets inclinables, opaques aux radiations.

6. Dispositif selon l'une quelconque des revendications 1 à 4, caractérisé en ce que les modulateurs (4) sont constitués par des volets inclinables réfléchissant une source lumineuse.

7. Dispositif selon l'une quelconque des revendications 1 à 4, caractérisé en ce que les modulateurs (4) sont constitués par des tubes remplis de matière absorbante aux radiations.

8. Dispositif selon l'une quelconque des revendications 1 à 6, caractérisé en ce que les modulateurs (4) comprennent des guides de lumière émettant des rayons lumineux en réponse à une excitation des moyens de commande.

9. Dispositif selon la revendication 8, caractérisé en ce que les guides de lumière sont constitués par des lampes à décharges.

10. Dispositif selon l'une quelconque des revendications 1 à 9, caractérisé en ce que les moyens de commande (8) sont constitués par un ordinateur comprenant au moins une mémoire (9), la mémoire (9) étant chargée à partir d'informations fournies par un tomographe.

11. Dispositif selon l'une quelconque des revendications précédentes, caractérisé en ce que le faisceau de radiation est un faisceau de rayons X.

12. Dispositif selon l'une quelconque des revendications 1 à 11, caractérisé en ce qu'il comprend un senseur d'image (10) placé en regard des modulateurs pour permettre la visualisation de l'image reconstruite.

0247912

FIG_1

CAMERA

MOYENS DE COMMANDE

MÉMOIRE

FIG_2

$$z = a_{n}, X, Y(x, y)$$

$$\frac{2\pi n}{N}$$

FIG_3

0247912

FIG_4

FIG_5-a

$\Sigma a'_n(x,y)$

FIG_5-b

0247912

# FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | MEDICAL PHYSICS, vol. 9, no. 3, mai/juin 1982, pages 324-339, Am. Assoc. Phys. Med., New York, US; G.R. GINDI et al.: "Imaging with rotating slit apertures and rotating collimators" * Abrégé; figures 2A,4 * | 1 | G 21 K 1/02<br>A 61 B 6/02<br>G 21 F 1/13 |
| A | SOVIET JOURNAL OF QUANTUM ELECTRONICS, vol. 7, no. 8, août 1977, pages 972-975, American Institute of Physics, New York, US; A.A. VASIL'EV et al.: "Tunable spatial filters in optical signal converters" * Figure 1 * | 1 | |
| A | FR-A-2 454 638 (ETABLISSEMENTS PIERRE ANGENIEUX) * Figures 3,4 * | 1 | |

**DOMAINES TECHNIQUES RECHERCHES (Int. Cl.4)**

G 21 K
A 61 B
G 02 F
G 01 T
G 02 B

Le présent rapport de recherche a été établi pour toutes les revendications

| Lieu de la recherche | Date d'achèvement de la recherche | Examinateur |
|---|---|---|
| LA HAYE | 07-08-1987 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82